# EUROPÄISCHE PATENTSCHRIFT

(11) **EP 1 285 803 B1**
(45) Veröffentlichungstag und Bekanntmachung des Hinweises auf die Patenterteilung: **09.06.2004**
(21) Anmeldenummer: 02014622.1
(22) Anmeldetag: 02.07.2002
(51) Int. Cl.: B60K 7/00, B60K 17/04

(54) **Einradtriebwerk**
Single-wheel drive train
Train de transmission pour une roue

(30) Priorität: 06.07.2001 DE 10132318
(43) Veröffentlichungstag der Anmeldung: 26.02.2003
(73) Patentinhaber: Kordel Antriebstechnik GmbH, 48234 Dülmen (DE)
(72) Erfinder: Raue, Josef, 48249 Dülmen (DE)
(74) Vertreter: Ackmann, Günther, Dr.-Ing.

(56) Entgegenhaltungen:
- DE-A- 3 028 276
- DE-A- 19 633 071
- DE-A- 19 826 067
- DE-C- 3 641 022
- GB-A- 935 201
- US-A- 3 662 849
- US-A- 5 558 174

## Beschreibung

Die Erfindung betrifft ein Einradtriebwerk, insbesondere für Flurförderfahrzeuge, bestehend aus einem Getriebegehäuse mit zumindest einer Getriebestufe, einem angeflanschten Antriebsmotor und einem getriebenen Laufrad, entsprechend dem Oberbegriff des Anspruchs 1.

Gattungsgemäße Einradtriebwerke werden bevorzugt für Flurförderfahrzeuge verwendet, wobei es auf eine kleine und schmale Bauart ankommt und durch ein möglichst tiefliegenden Schwerpunkt des Fahrzeugs eine Kippgefahr verringert wird. Der Einbauraum ist hierbei klein zu halten, damit die Manövriermöglichkeit des Fahrzeugs verbessert wird. Hierbei darf nicht außer Acht gelassen werden, dass über das Einradtriebwerk recht hohe Antriebskräfte und Belastungen von 1 bis 3 Tonnen auf ein einzelnes getriebenes Laufrad übertragen werden müssen und insofern das Gehäuse bzw. die notwendige Getriebestufe für derartige Belastungen ausgelegt sein muss.

Aus der DE-PS 31 33 027 ist beispielsweise ein Einradtriebwerk bekannt, bei dem bei einer zweistufigen Getriebeausführung auf der E-Motorenwelle ein Ritzel eines Stirnradtriebes angeordnet ist, wodurch jedoch der Teilkreis durch die erforderliche Materialstärke zwischen Zahnfuß und Aufnahmebohrung verhältnismäßig groß und somit das Untersetzungsverhältnis eingeschränkt ist. Zudem erfordert eine derartige bauliche Maßnahme einen höheren Herstellungsaufwand. Die Lagerung der nach unten abgehenden Stirnrad- und Kegelritzelwelle liegt auf der Höhe der Felge und des Reifens des Laufrads, wodurch deren Abstand zur Achsmitte des Getriebes nicht so klein gehalten werden kann, wie es zum Erreichen eines besonders kleinen Schwenkradius wünschenswert ist.

Es hat sich im Weiteren erwiesen, dass bei bekannten Ausführungen von Einradtriebwerken die Montage und Demontage, insbesondere für spätere Wartungszwecke, einen erhöhten Arbeitsaufwand erfordert und an die Konstruktion des Gehäuses erhöhte Anforderungen gestellt werden.

Aus dem gattungsgemäßen Dokument US-Patent 5,558,174 ist eine Getriebeanordnung, beispielsweise für Gabelstapler, bekannt, die zum Antrieb und zur Lenkung eines jeweils einzeln angetriebenen Doppelrades vorgesehen ist. Zur Kraftübertragung wird ein Elektromotor verwendet, der über eine Kegelradverzahnung ein Kegelrad antreibt, welches wiederum drehfest auf einer Welle gehalten ist, während die Welle mit einer anderenends ausgebildeten Stirnverzahnung mit einer Innenverzahnung der Laufradnabe kämmt. Vorzugsweise wird eine derartige Anordnung bei starren Achsen verwendet. Anderenfalls können die Laufräder zusammen mit den Elektromotoren und der Getriebeeinheit starr verschraubt und in einer schwenkbeweglichen Halterung aufgenommen werden, die eine Richtungssteuerung ermöglicht. Aufgrund der doppelt ausgeführten Laufräder sind jedoch erhebliche Lenkkräfte erforderlich, um die unterschiedlichen Wegstrecken der beiden Laufräder bei einer Kurvenfahrt ohne Differenzial auszugleichen.

Aus der deutschen Offenlegungsschrift DE 198 26 067 A1 ist demgegenüber ein Getriebe für ein lenkbares Antriebsrad eines Flurförderfahrzeuges bekannt, bei dem lediglich ein Laufrad verwendet wird und dieses von einem Elektromotor angetrieben wird, der oberhalb des Laufrades angeordnet ist. Ein zweistufiges Getriebe überträgt das Drehmoment von dem Elektromotor über eine erste Getriebestufe mit Stirnradverzahnung auf eine vertikale Antriebswelle und von dieser über ein Kegelrad auf eine horizontale Antriebswelle, welche wiederum drehfest mit dem Laufrad verbunden ist. Die horizontale Antriebswelle ist in einer Gehäusebohrung aufgenommen und gegenüber Lagerelemente abgestützt. Durch die horizontale Welle besteht jedoch zwischen der Laufradmittelachse und der vertikalen Welle ein nicht zu verringernder Abstand, wodurch der Schwenkradius und damit die Beweglichkeit des Flurförderfahrzeugs eingeschränkt ist.

Der vorliegenden Erfindung liegt die Aufgabe zugrunde, ein Einradtriebwerk zu schaffen, welches einen möglichst geringen Bauraum aufweist und eine vereinfachte Montage bzw. Demontage bei gleichzeitig hoher Kraftübertragung ermöglicht.

Erfindungsgemäß ist zur Lösung der Aufgabe vorgesehen, dass das Laufrad unmittelbar mit einem als Kegelrad ausgebildeten Getrieberad drehfest verbunden ist, welches drehbar auf einem koaxial innen liegenden und feststehenden Stützelement gelagert ist, wobei das Kegelrad mit einem Kegelritzel oder einem Kegelradritzelverzahnung einer rechtwinklig zur Laufradachse angeordneten Antriebswelle kämmt. Dadurch, dass das Laufrad unmittelbar mit einem Getrieberad drehfest verbunden ist und auf einem Stützelement aufsitzt, kann die Anzahl der verwendeten Bauelemente erheblich reduziert werden, wodurch einerseits eine Kosteneinsparung eintritt und andererseits eine wesentliche Konstruktionsvereinfachung zu verzeichnen ist. Bei einer derartigen Lösung, wo insbesondere das Getrieberad drehbar auf einem Gehäusezapfen oder einem drehfest gehaltenen Wellenzapfen, der in einem Gehäusedurchbruch aufgenommen ist, gelagert ist, kann beispielsweise eine Flanschwelle mit Lagerelementen entfallen und auf Grund der vereinfachten Konstruktionsweise reicht in der Regel ein einteiliges Gehäuse, welches ohne Deckel und Verschraubungen auskommt. Diese Ausführung weist eine extrem schmale Bauweise auf, wobei ferner ein größeres Kegelrad bei gleicher Getriebebaugröße eingesetzt werden kann und somit zu einer Getriebeverstärkung führt. Besonders vorteilhaft ist auch die Krafteinleitung unmittelbar über das Kegelrad auf das Laufrad. Der in einem Gehäusedurchbruch aufgenommene Wellenzapfen kann bevorzugt bei größerer Lastbeanspruchung eingesetzt werden. Durch den nicht drehbaren Wellenzapfen wird darüber hinaus das Gehäuse im unteren Bereiche in vorteilhafter Weise verstärkt, wobei die auftretenden Kräfte über den Wellenzapfen sofort in das Gehäuse eingeleitet werden. Das abtriebseitige Kegelrad kann hierbei einen einstückig angeformten topfförmigen Ansatz in Richtung auf das Laufrad aufweisen, um einerseits mit dem Laufrad direkt verbunden zu werden und andererseits eine möglichst große Lagerfläche gegenüber dem Gehäusezapfen beziehungsweise Wellenzapfen auszubilden.

In Ausgestaltung der Erfindung ist vorgesehen, dass das Getriebe zweistufig ausgebildet ist und eine erste Getriebestufe mit einer Stirnradverzahnung dem Antriebsmotor zugeordnet ist, während eine zweite Getriebestufe mit einer Kegelradverzahnung dem Laufrad zugeordnet ist, wobei die beiden Getriebestufen durch eine in dem Gehäuse gelagerte Antriebswelle verbunden sind und das Laufrad drehfest mit dem abtriebseitigen Kegelrad verbunden ist und ein Laufradkranz und/oder das Kegelrad über Lagerelemente gegenüber dem Gehäusezapfen oder Wellenzapfen abgestützt sind. Bei der erfindungsgemäßen Ausführung des Einradtriebwerks stützt sich das Laufrad zusammen mit dem abtriebsseitigen Kegelrad unmittelbar auf einen Gehäuseteil, nämlich einem Gehäusezapfen oder Wellenzapfen ab, wobei entsprechende Lagerelemente, z. B. Wälzlager, verwendet werden. Die in dem Gehäuse gelagerte Antriebswelle verbindet die erste aus der Stirnradverzahnung bestehende Getriebestufe in der Nähe des Antriebsmotors mit der Kegelradstufe zum Antrieb des Laufwerks in vorteilhafter Weise. Durch den Gehäusezapfen oder Wellenzapfen ist beispielsweise bei dem Gehäuse keine Mindestwandstärke für auftretende Kräfte erforderlich, weil diese unmittelbar auf das Laufrad übertragen werden können. Durch diese besondere Anordnung der Befestigung des Laufrads besteht im Weiteren die Möglichkeit, die Gestaltung des Radkörpers variabel vorzunehmen und insbesondere existierende Radkörper bei dieser Neukonstruktion weiter zu verwenden. Insgesamt gesehen kann somit bei gleicher oder verringerter Baugröße eine Getriebeverstärkung durch die Neukonstruktion herbeigeführt werden, die darüber hinaus mit weniger konstruktiven Elementen auskommt und somit zu einer Reduzierung des Arbeitsaufwands für eine Montage bzw. Demontage führt.

Das Stützelement ist hierbei axial zum Laufrad angeordnet und mit dem Gehäuse verbunden, beispielsweise verschraubt oder vorzugsweise einstückig mit dem Gehäuse ausgebildet oder im Falle des Wellenzapfens in einen Durchbruch eingepresst, wobei das Stützelement zur Aufnahme zweier Wälzlager vorgesehen ist, auf welchen sich das Kegelrad und ggf. der Laufradkranz abstützen kann. Unter Berücksichtigung der vorgegebenen Abmessungen und Belastungen für ein Einradtriebwerk mit einem kleinstmöglichen Einbauraum und einem optimalen Verzahnungs- und Lagerungsverhältnis kann durch die erfindungsgemäße Neukonstruktion eine kostengünstige Herstellung erzielt werden. Ein weiterer Vorteil besteht darin, dass unter Berücksichtigung des kleinen Einbauraums und der Lagerung der Antriebswelle ein kleinstmöglicher Schwenkradius um die vertikale Schwenkachse des Einradtriebwerks erreicht wird, insbesondere bei Laufrädern, die auf Grund ihres verhältnismäßig kleinen Außendurchmessers zwischen der Radnabe und dem Laufradkranz keinen Raum zum Unterbringen einer anderen Lagerung der Antriebswelle bieten. Hierbei ist insbesondere die Lagerung der Antriebswelle durch die Anordnung ihrer beiden Lager jeweils außerhalb der Verzahnungen in Folge des verhältnismäßig großen Abstandes zueinander besonders günstig gestaltet. Die Einstellung eines guten Tragbildes und eines günstigen Lagerspiels des spiral- oder kreisbogenverzahnten Kegeltriebes ist vereinfacht, da sowohl das Stirnrad, als auch das Kegelritzel auf der Antriebswelle vor dem Einbau festsitzend montiert werden können. Für die erforderliche Justierung der axialen Lage der Kegelritzelverzahnung bzw. des Kegelrades sind Beilagescheiben auf einfache Weise dem Lager entsprechend zuzuordnen, wobei das Stirnrad durch Presssitz mit der Antriebswelle verbunden sein kann.

In besonderer Ausgestaltung der Erfindung ist vorgesehen, dass in dem drehfest gehaltenen Gehäusezapfen oder Wellenzapfen eine Pumpeinrichtung integriert ist, welche aus einem axial beweglichen Stößel und einem Druckraum mit einem Einlass- und Auslassventil besteht. Mit Hilfe der integrierten Pumpeinrichtung besteht die Möglichkeit Getriebeöl aus dem unteren Gehäuseinnenraum nach oben zur Schmierung der oberen Lagerelemente zu pumpen. Hierbei besteht insbesondere der Vorteil, dass das Getriebegehäuse nicht vollständig mit Öl gefüllt werden muss, sodass beispielsweise kein übermäßiger Schlupf entsteht und damit der Wirkungsgrad des Getriebes verbessert wird. Gleichzeitig wird durch die Pumpeinrichtung sichergestellt, dass die oberen Getriebeelemente und auch Lagerelemente ausreichend geschmiert werden. Der Stößel liegt hierbei mit einem Ende in einer Nut mit einer wellenförmigen Vertiefung ein, die im topfförmigen Ansatz des Kegelrades ausgebildet ist, wobei der Stößel federbelastet in die Nut gedrückt wird und infolge der Drehbewegung in eine axiale Bewegung versetzt wird. Die gegenüberliegende Seite des Stößels ist gegenüber einem Druckraum abgedichtet und wird als Kolben eingesetzt, der das vorhandene Öl über ein Einlass- und Auslassventil nach oben pumpen kann. Zu diesem Zweck ist in der Antriebswelle 24 eine als Ölkanal ausgebildete Bohrung vorhanden, die über das Auslassventil in den Druckraum mündet, während das Einlassventil mit dem unteren Getriebeinnenraum verbunden ist. Die Bohrung endet oberhalb der Antriebwelle 24 in einer Höhe die eine ausreichende Schmierung der vorhandenen oberen Lagerelemente gewährleistet.

Der Abtriebswellenstumpf der E-Motorenwelle kann mit einer Ritzelverzahnung oder einem Ritzel versehen sein und treibt durch die Verzahnung der hochtourigen E-Motorenwelle mit einer niedrigen Zähnezahl das Stirnrad an, wodurch das Untersetzungsverhältnis des Stirnradtriebes optimal ausgebildet ist und somit unter Berücksichtigung der Gesamtuntersetzung dieses zweistufigen Einradtriebwerks das Untersetzungsverhältnis des Kegelradtriebs nur so klein zu wählen ist, dass bei der Kegelradritzelverzahnung eine größere Zähnezahl als die Grenzzähnezahl vorgesehen werden kann, wodurch hier im Hinblick auf das hohe Drehmoment eine solidere Ausführung vorliegt als bei gattungsgemäßen Triebwerken dieser Art mit Stirnritzeln höherer Zähnezahlen.

Eine Drehmomentübertragung erfolgt somit von dem Antriebsmotor mit einer Ritzelverzahnung auf ein Stirnrad, welches drehfest mit einer Antriebswelle verbunden ist und wobei die Antriebswelle über eine Kegelritzelverzahnung das mit dem Laufrad verbundene Kegelrad antreibt.

In weiterer Ausgestaltung der Erfindung ist vorgesehen, dass das Gehäuse einteilig ausgebildet ist und eine erste Öffnung zum Antriebsmotor und eine zweite Öffnung zum Laufrad hin aufweist. Die vorhandenen Öffnungen des Gehäuses erleichtern die Montage und Demontage des Einradtriebwerks, wobei die erste Öffnung durch eine Verschraubung mit dem Drehkranzlagerinnenring nach der Montage und die zweite Öffnung durch das Kegelrad und eine einklemmbare Abdeckklappe verschlossen wird. Zwischen den drehfesten und drehbeweglichen Elementen werden hierbei Abdichtungsmittel verwendet, welche das eingeschlossene Volumen begrenzen und ein Austritt des Getriebeöls verhindern.

Das erfindungsgemäße Einradtriebwerk wird im Weiteren anhand der Zeichnung näher erläutert.

Es zeigt
- Fig. 1: eine geschnittene Seitenansicht eines erfindungsgemäßen Einradtriebwerkes mit einem Gehäusezapfen,
- Fig. 2: eine geschnittene Seitenansicht eines erfindungsgemäßen Einradtriebwerkes mit einem eingepressten Wellenzapfen und
- Fig. 3: eine geschnittene Seitenansicht eines erfindungsgemäßen Einradtriebwerkes mit einem Gehäusezapfen und integrierter Pumpeinrichtung.

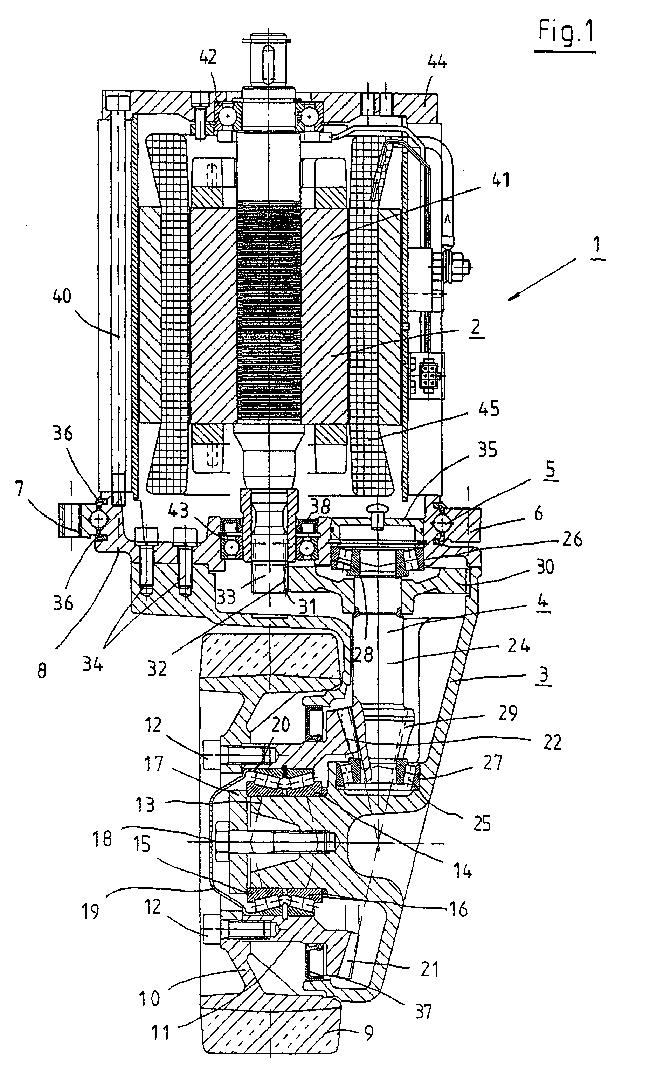

Figur 1 zeigt eine geschnittene Seitenansicht eines Einradtriebwerkes 1, bestehend aus einem Antriebsmotor 2, einem Gehäuse 3 mit einem zweistufigen Getriebe 4 und einem Drehkranzlager 5 zur schwenkbaren Lagerung des Gehäuses 3.

Der Außenring 6 des Drehkranzlagers 5 ist zur Montage des Einradtriebwerks 1 in einem Fahrzeug vorgesehen, wobei mehrere umfangsverteilte Gewindebogen 7 zur Verschraubung verwendet werden können. Der Drehkranzlagerinnenring 8 dient zur Aufnahme des senkrecht aufgesetzten Antriebsmotors 2 und des unterhalb des Antriebsmotors 2 befindlichen Gehäuses 3. Somit kann der Antriebsmotor 2 zusammen mit dem Gehäuse 3 gegenüber dem anzutreibenden Flurförderfahrzeug geschwenkt werden. Zum Antrieb des Flurförderfahrzeugs ist ein Laufrad 9 vorgesehen, welches auf einem Laufradkranz 10 aufgepresst ist. Das Laufrad 9 kann beispielsweise aus einem Vollgummi- oder Kunststoffrad bestehen. Erfindungsgemäß erfolgt die Verschraubung des Laufradkranzes 10 mit der abtriebsseitigen Getriebestufe mit einem Kegelrad 11 durch mehrere umfangsverteilte Schraubbolzen 12. Der Laufradkranz 10 und das Kegelrad 11 ruht hierbei auf einem Gehäusezapfen 13, der einstückig an das Gehäuse 3 angeformt ist. Auf seiner außen liegenden Fläche 14 weist der Gehäusezapfen 13 zwei gegeneinander gerichtete Wälzlager 15,16 auf, welche durch eine Andruckscheibe 17 gehalten werden. Die Andruckscheibe 17 ist durch einen Schraubbolzen 18 mit dem Gehäusezapfen 13 verschraubt. Die Wälzlager 15,16 sowie der Schraubbolzen 18 sind durch eine eingeklemmte Abdeckkappe 19 vor Verschmutzung geschützt. Die Abdeckkappe 19 verschließt gleichzeitig die Gehäuseöffnung 20. Das Kegelrad 11 kämmt mit seiner Kegelradverzahnung 21 mit der Kegelritzelverzahnung 22 eines Kegelritzels 29 der Antriebswelle 24. Die Antriebswelle 24 ist seitlich versetzt gegenüber dem Antriebsmotor 2 angeordnet und durch ein oberes und unteres Wälzlager 25,26 gegenüber dem Gehäuse 3 abgestützt. Die Wälzlager 25,26 sind jeweils endseitig auf der Antriebswelle 24 montiert und ruhen in einer Ausnehmung 27 bzw. 28 des Gehäuses 3. Die untere Getriebestufe wird durch das Kegelrad 11 und einem auf der Antriebswelle 24 befestigten Kegelritzel 29 gebildet. Alternativ besteht die Möglichkeit die Antriebswelle 24 mit einer Kegelverzahnung zu versehen.

Die zweite Getriebestufe wird durch ein Stirnrad 30 mit einer Stirnradverzahnung 31 und einer Ritzelverzahnung 32 der E-Motorenwellen 33 gebildet. Die E-Motorenwelle 33 ragt über das Drehkranzlager 5 hinaus in das Getriebegehäuse 3 hinein, sodass die Ritzelverzahnung 32 zum Eingriff in die Stirnradverzahnung 31 des Stirnrads 30 führt. Das Gehäuse 3 ist über mehrere umfangsverteilte Schraubbolzen 34 mit dem Drehkranzlagerinnenring 8 verschraubt. Die Ausnehmung 28 für das obere Wälzlager 26 der Antriebswelle 24 ist durch eine abgedichtete Verschlusskappe 35 verschlossen. Der Drehkranzlagerinnenring 8 verschließt somit mit dem senkrecht gegenüber dem Getriebe 4 angeordneten Antriebsmotor 2 die obere Öffnung des Gehäuses 3. Zur Vermeidung von Verunreinigungen ist der Drehkranzlageraußenring 6 und der Drehkranzlagerinnenring 8 durch Dichtungen 36 abgedichtet. Das Getriebe 4 ist demgegenüber vor Verschmutzungen oder einem Ölverlust durch Dichtungselemente 37,38 abgedichtet.

Der Antriebsmotor 2 ist senkrecht auf dem Drehkranzlager 5 montiert und wird durch mehrere umfangsverteilte Schraubbolzen 40 mit dem Drehkranzlagerinnenring 8 verschraubt. Die E-Motorenwelle 33 mit der Ankerwicklung 41 ist über ein unteres und oberes Wälzlager 42,43 einerseits gegenüber dem Gehäuse 44 des Antriebsmotors 2 und andererseits gegenüber dem Drehkranzlagerinnenring 8 abgestützt. Die Motorenwicklung 45 ist im Gehäuse 44 befestigt. Das der Ritzelverzahnung 32 gegenüberliegende Ende der E-Motorenwelle 33 ist aus dem Motorengehäuse 44 herausgeführt und dient zum Anschluss einer Lenkgabel.

Der Antrieb des Einradtriebwerks 1 erfolgt über den mit Spannung beaufschlagbaren Antriebsmotor 2 über die Ritzelverzahnung 32 der Antriebswelle 33 unmittelbar auf das Stirnrad 30, welches drehfest mit der Antriebswelle 24 verbunden ist und ein Drehmoment auf das Kegelritzel 29 und von diesem über die Verzahnung 21,22 auf das Kegelrad 11 überträgt, welches drehfest mit dem Laufradkranz 10 bzw. Laufrad 9 verbunden ist. Die Schwenkbarkeit des Lenktriebwerks 1 ist durch das Drehkranzlager 5 gewährleistet und kann durch die nicht dargestellte Lenkgabel erfolgen. Die erfindungsgemäße Ausführung des Einradtriebwerks 1 benötigt gegenüber dem bekannten Stand der Technik keine Laufradwelle, wodurch einerseits eine Kostenersparnis eintritt und andererseits die Montage bzw. Demontage erleichtert wird. Darüber hinaus zeichnet sich die Konstruktion durch einen relativ einfachen Aufbau des Gehäuses 3 aus und führt durch die direkte Kopplung zwischen Laufrad 9 und Kegelrad 11 zu einer besonders vorteilhaften Drehmomentübertragung auf das Laufrad 9. Im Weiteren ist durch die Anordnung der Wälzlager 25,26 für die Antriebswelle 24 außerhalb des Stirnrads 30 und dem Kegelritzel 29 die Möglichkeit geschaffen, ein besonders günstiges Kleinspiel zwischen der Getriebewand und dem angetriebenen Laufrad zu ermöglichen. Durch die erfinderische Ausbildung ist ferner ein kleinstmöglicher Abstand zwischen der Antriebswelle 24 und der E-Motorenwelle 33 bei gleicher oder höherer Drehmomentübertragung möglich.

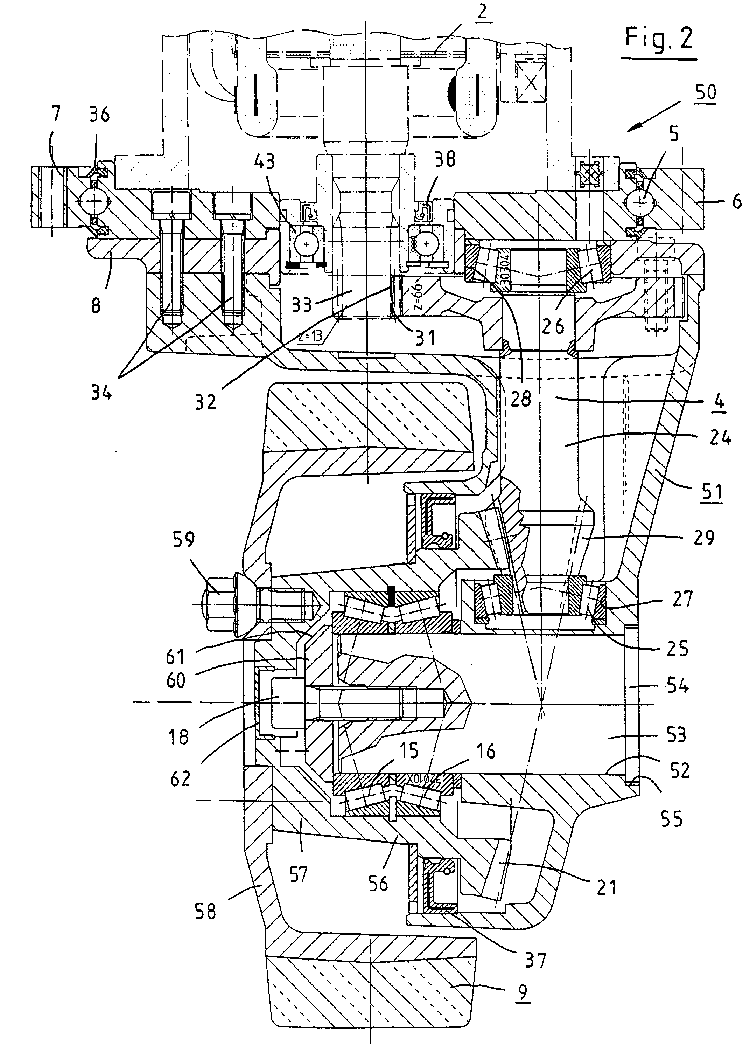

Figur 2 zeigt in einer geschnittene Seitenansicht eine weitere Ausführungsform eines Einradtriebwerkes 50, bestehend aus einem Antriebsmotor 2, einem Gehäuse 51 mit einem zweistufigen Getriebe 4 und einem Drehkranzlager 5 zur schwenkbaren Lagerung des Gehäuses 51.

Der Aufbau des Einradtriebwerkes 50 entspricht weitestgehend der Ausführung gemäß Figur 1. Lediglich das Gehäuse 51 weist durch seine Formgebung von dem aus Figur 1 bekannten Gehäuse ab. Anstelle eines Gehäusezapfens ist im unteren Bereich des Gehäuses 51 ein Durchbruch 52 vorhanden, der zur Aufnahme eines Wellenzapfens 53 vorgesehen ist. Der Wellenzapfen 53 ist in dem Durchbruch 52 in derart eingepresst, dass er drehfest im Gehäuse 51 aufgenommen ist. Im gezeigten Ausführungsbeispiel weist der Wellenzapfen 53 einen flanschförmigen Kragen 54 auf, der in einer Aussparung 55 des Gehäuses 51 zu liegen kommt. Der Wellenzapfen 53 durchdringt das gesamte untere Gehäuse 51 und dient im Weiteren zur Aufnahme der Wälzlager 15, 16, wie sie bereits aus Figur 1 bekannt sind, die im Weiteren abstützend ein Kegelrad 56 aufnehmen. Gegenüber der bekannten Ausführung weist das Kegelrad 56 einen in Richtung auf das Laufrad 9 topfförmigen Ansatz 57 auf, an dem unmittelbar das Laufrad 9 mit seiner Felge 58, die auch von der bisherigen Form geringfügig abweicht, mittels Schraubbolzen 59 befestigt ist. Zur Fixierung der Wälzlager 15, 16, dient wiederum eine Andruckscheibe 60, die eine Abschrägung 61 aufweist, und durch einen Schraubbolzen 8 unmittelbar mit dem Wellenzapfen 53 verschraubt ist. Dadurch, dass die Andruckscheibe 60 in ihrem Durchmesser etwas größer als der Wellenzapfen 53 bemessen ist, werden die Wälzlager 15, 16 in ihrer Position auf der Außenfläche des Wellenzapfens 53 fixiert. Eine Abdeckkappe 62 verschließt wiederum eine Durchgangsbohrung zu dem Schraubbolzen 18, damit keine Verunreinigungen in die Wälzlager 15, 16, gelangen. Durch die Ausführung eines Gehäuse 51 mit einem eingepressten Wellenzapfen 53 in einem Durchbruch 52 wird das Gehäuse 51 im unteren Bereich zusätzlich verstärkt und darüber hinaus die gießtechnische Herstellung des Gehäuses 51 vereinfacht. Mit dem Einradtriebwerk 50 ergeben sich ansonsten die gleichen technischen Vorteile wie aus der Ausführung gemäß Figur 1.

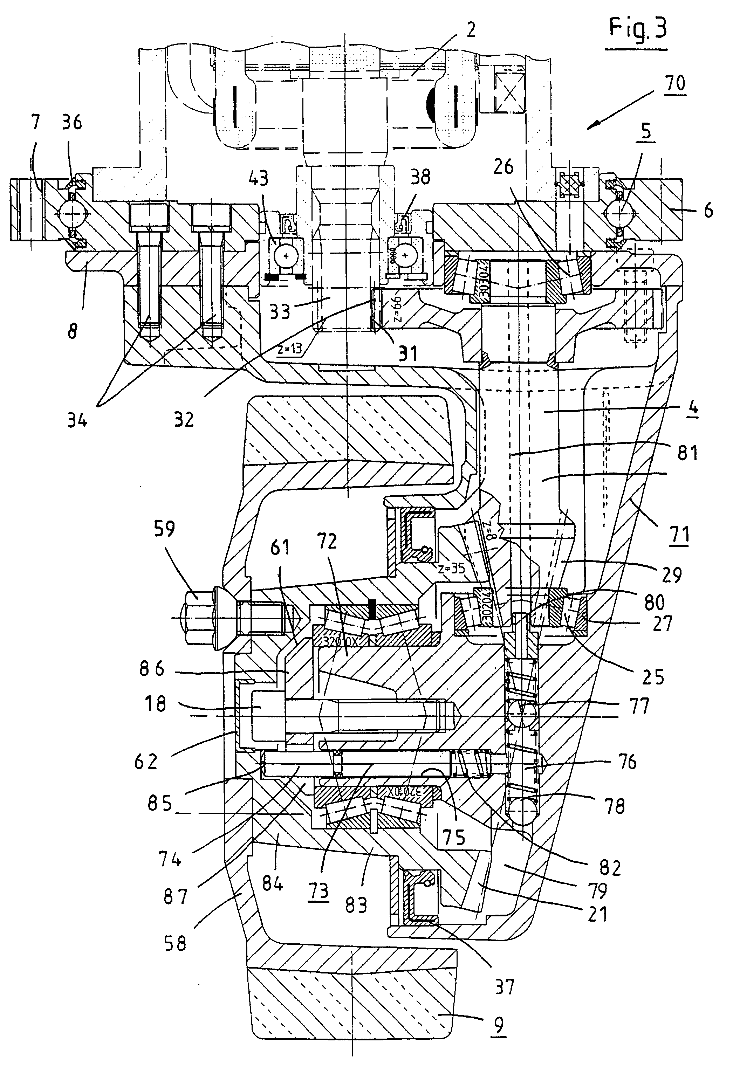

Figur 3 zeigt eine weitere geschnittene Seitenansicht eines Einradtriebwerkes 70, ebenfalls bestehend aus einem Antriebsmotor 2, einem Gehäuse 71 mit einem zweistufigen Getriebe 4 und einem Drehkranzlager 5 zur schwenkbaren Lagerung des Gehäuses 71. Das Einradtriebwerk 70 ist annähernd baugleich mit dem aus Figur 1 beziehungsweise 2 bekannten Einradtriebwerk 1, 50. Abweichungen ergeben sich jedoch dadurch, dass in einem Gehäusezapfen 72 zusätzlich eine Pumpeinrichtung 73 aufgenommen ist. Die Pumpeinrichtung 73 besteht aus einem Stößel 74, der axial beweglich in einer Bohrung 75 des Gehäusezapfens 72 gelagert ist. Der Stößel 74 wirkt auf einen Druckraum 76, der mit einem Auslassventil 77 und einem Einlassventil 78 verbunden ist. Das Einlassventil 78 mündet in einen unteren Gehäuseinnenraum 79 der in der Regel vollständig mit Öl gefüllt ist. Das Auslassventil 77 ist demgegenüber durch einen Verbindungskanal 80 mit einer in der Antriebswelle 24 zentrisch verlaufenden Bohrung 81 verbunden, wobei die Bohrung 81 bis oberhalb des zur Lagerung der Antriebswelle 24 vorgesehenen Wälzlagers 26 verläuft. Infolge der Pumpwirkung wird daher das Öl aus dem Gehäuseinnenraum 79 über das Einlassventil 78 und das Auslassventil 77 innerhalb der Bohrung 81 bis zum Wälzlager 26 gepumpt, von wo aus es sowohl die Antriebswelle 24 als auch die weiteren Getriebekomponenten mit ausreichender Ölmenge versorgt. Der Stößel 74 wird durch eine Feder 82 im gezeigten Ausführungsbeispiel gegen einen topfförmigen Ansatz 84 des Kegelrades 83 gedrückt und liegt in einer Nut 85 ein, die ringförmig um den Schraubbolzen 18 angeordnet ist und eine wellenförmige Vertiefung aufweist, sodass der Stößel 74 in eine axiale Bewegung gegen die Federkraft der Feder 82 bei einer Drehung des Laufrades 9 versetzt wird. Das gegenüberliegende Ende des Stößels 74 ist gegenüber dem Druckraum 76 insoweit abgedichtet, dass eine Saug- und Druckwirkung erzielt werden kann. Damit der Stößel 74 in die Nut 85 eingreifen kann weist die Andruckscheibe 86 einen Durchbruch 87 auf.

### Bezugszeichenliste

- 1: Einradtriebwerk
- 2: Antriebsmotor
- 3: Gehäuse/Getriebegehäuse
- 4: Getriebe
- 5: Drehkranzlager
- 6: Drehkranzlageraußenring
- 7: Gewindebohrung
- 8: Drehkranzlagerinnenring
- 9: Laufrad
- 10: Laufradkranz
- 11: Kegelrad
- 12: Schraubbolzen
- 13: Gehäusezapfen
- 14: Fläche
- 15: Wälzlager
- 16: Wälzlager
- 17: Andruckscheibe
- 18: Schraubbolzen
- 19: Abdeckkappe
- 20: Gehäuseöffnung
- 21: Kegelradverzahnung
- 22: Kegelritzelverzahnung
- 24: Antriebswelle
- 25: Wälzlager
- 26: Wälzlager
- 27: Ausnehmung
- 28: Ausnehmung
- 29: Kegelritzel
- 30: Stirnrad
- 31: Stirnradverzahnung
- 32: Ritzelverzahnung
- 33: E-Motorenwelle
- 34: Schraubbolzen
- 35: Verschlusskappe
- 36: Dichtung
- 37: Dichtungselement
- 38: Dichtungselement
- 40: Schraubbolzen
- 41: Ankerwicklung
- 42: Wälzlager
- 43: Wälzlager
- 44: Motorengehäuse
- 45: Motorenwicklung
- 50: Einradtriebwerk
- 51: Gehäuse
- 52: Durchbruch
- 53: Wellenzapfen
- 54: Kragen
- 55: Aussparung
- 56: Kegelrad
- 57: Ansatz
- 58: Felge
- 59: Schraubbolzen
- 60: Andruckscheibe
- 61: Abschrägung
- 62: Abdeckkappe
- 70: Einradtriebwerk
- 71: Gehäuse
- 72: Gehäusezapfen
- 73: Pumpeinrichtung
- 74: Stößel
- 75: Bohrung
- 76: Druckraum
- 77: Auslassventil
- 78: Einlassventil
- 79: Gehäuseinnenraum
- 80: Verbindungskanal
- 81: Bohrung
- 82: Feder
- 83: Kegelrad
- 84: Ansatz
- 85: Nut
- 86: Andruckscheibe
- 87: Durchbruch

## Patentansprüche

1. Einradtriebwerk (1, 50, 70), insbesondere für Flurförderfahrzeuge, bestehend aus einem Getriebegehäuse (3, 51, 71) mit zumindest einer Getriebestufe (4), einem angeflanschten Antriebsmotor (2) und einem getriebenen Laufrad (9),
**dadurch gekennzeichnet,**
**dass** das Laufrad (9) unmittelbar mit einem als Kegelrad (11, 56, 83) ausgebildeten Getrieberad drehfest verbunden ist, welches drehbar auf einem koaxial innen liegenden und feststehenden Stützelement gelagert ist, wobei das Kegelrad (11, 56, 83) mit einem Kegelritzel (29) oder einer Kegelradritzelverzahnung einer rechtwinklig zur Laufradachse angeordneten Antriebswelle (24) kämmt.

2. Einradtriebwerk nach Anspruch 1,
**dadurch gekennzeichnet,**
**dass** das Stützelement aus einem Gehäuseteil, insbesondere Gehäusezapfen (13), oder einem drehfest gehaltenen Wellenzapfen (53) besteht, der in einem Gehäusedurchbruch (52) aufgenommen ist.

3. Einradtriebwerk nach Anspruch 1 oder 2,
**dadurch gekennzeichnet,**
**dass** ein Laufradkranz (10, 58) und/oder das abtriebseitige Kegelrad (11, 56, 83) über Lagerelemente (14, 15) gegenüber einem Gehäusezapfen (13) oder Wellenzapfen (53) abgestützt ist.

4. Einradtriebwerk nach Anspruch 1, 2 oder 3,
**dadurch gekennzeichnet,**
**dass** das Getriebe (4) zweistufig ausgebildet ist und eine erste Getriebestufe mit einer Stirnradverzahnung (31) dem Antriebsmotor (2) zugeordnet ist, während eine zweite Getriebestufe mit einer Kegelradverzahnung (21) dem Laufrad (9) zugeordnet ist, wobei die beiden Getriebestufen durch die in dem Gehäuse (3) gelagerte Antriebswelle (24) verbunden sind.

5. Einradtriebwerk nach wenigstens einem der Ansprüche 1 - 4,
**dadurch gekennzeichnet,**
**dass** ein Gehäusezapfen (13) axial zum Laufrad (9) angeordnet und mit dem Gehäuse (3) verschraubt ist.

6. Einradtriebwerk nach wenigstens einem der Ansprüche 1 - 5,
**dadurch gekennzeichnet,**
**dass** ein Gehäusezapfen (13 axial zum Laufrad (9) angeordnet und mit dem Gehäuse (3) einstückig ausgebildet ist.

7. Einradtriebwerk nach wenigstens einem der Ansprüche 1 - 6,
**dadurch gekennzeichnet,**
**dass** ein Wellenzapfen (53) in einem Durchbruch (52) des Gehäuses (51) verpresst ist.

8. Einradtriebwerk nach wenigstens einem der Ansprüche 1 - 7,
**dadurch gekennzeichnet,**
**dass** der Gehäusezapfen (13) und/oder Wellenzapfen (53) zur Aufnahme mindestens eines Wälzlagers (15,16) vorgesehen ist.

9. Einradtriebwerk nach wenigstens einem der Ansprüche 1 - 8,
**dadurch gekennzeichnet,**
**dass** sich auf dem Wälzlager (15,16) der Laufradkranz (10) und/oder das Kegelrad (11, 56, 83) abstützt.

10. Einradtriebwerk nach wenigstens einem der Ansprüche 1 - 9,
**dadurch gekennzeichnet,**
**dass** das Kegelrad (11, 56, 83) einen sich in Richtung des Laufrades (9) erstreckenden einstückig angeformten, topfförmigen Ansatz (57, 84) aufweist.

11. Einradtriebwerk nach wenigstens einem der Ansprüche 1 -10,
**dadurch gekennzeichnet,**
**dass** in dem drehfest gehaltenen Gehäusezapfen (13) oder Wellenzapfen (53) eine Pumpeinrichtung integriert ist, welche aus einem axial beweglichen Stößel (74) und einem Druckraum (76) mit einem Einlass- (78) und Auslassventil (77) besteht.

12. Einradtriebwerk nach wenigstens einem der Ansprüche 1 - 11,
**dadurch gekennzeichnet,**
**dass** der Stößel (74) durch eine Andruckscheibe (86) hindurch in eine Nut (85) des topfförmigen Ansatzes (84) des Kegelrads (83) eingreift, wobei der Stößel (74) durch eine Feder (82) in die Nut (84) gedrückt wird und die Nut (84) ringförmig angeordnet ist und eine wellenförmige Vertiefung aufweist.

13. Einradtriebwerk nach wenigstens einem der Ansprüche 1 - 12,
**dadurch gekennzeichnet,**
**dass** die Antriebswelle (24) eine als Ölkanal ausgebildete Bohrung (81) aufweist, die über das Auslassventil (77) in den Druckraum (76) mündet, während das Einlassventil (78) mit dem unteren Getriebeinnenraum (79) verbunden ist.

14. Einradtriebwerk nach wenigstens einem der Ansprüche 1 - 13,
**dadurch gekennzeichnet,**
**dass** die Antriebswelle (24) oberhalb eines Stirnrads (30) und unterhalb einem Kegelritzel (29) oder einer Kegelradritzelverzahnung gelagert ist.

15. Einradtriebwerk nach wenigstens einem der Ansprüche 1 - 14,
**dadurch gekennzeichnet,**
**dass** das Stirnrad (30) und das Kegelritzel (29) durch Presssitz mit der Antriebswelle (24) verbunden sind und/oder dass die Antriebswelle (24) mit einer als Ölkanal ausgebildeten Bohrung (81) versehen ist.

16. Einradtriebwerk nach wenigstens einem der Ansprüche 1 - 15,
**dadurch gekennzeichnet,**
**dass** der Abtriebswellenstumpf der E-Motorenwelle (33) mit einem Antriebsritzel oder einer Ritzelverzahnung (32) versehen ist.

17. Einradtriebwerk nach wenigstens einem der Ansprüche 1 - 16,
**dadurch gekennzeichnet,**
**dass** eine Drehmomentübertragung von dem Antriebsmotor (2) mit einer Ritzelverzahnung (32) auf ein Stirnrad (30) erfolgt, welches drehfest mit einer Antriebswelle (24) verbunden ist und wobei die Antriebswelle (24) über eine Kegelradverzahnung oder ein Kegelritzel (29) das mit dem Laufrad (9) verbundene Kegelrad (11, 56, 83) antreibt.

18. Einradtriebwerk nach wenigstens einem der Ansprüche 1 - 17,
**dadurch gekennzeichnet,**
**dass** das Gehäuse (3, 51, 71) einteilig ausgebildet ist und eine erste Öffnung zum Antriebsmotor (2) und eine zweite Öffnung zum Laufrad (9) hin aufweist.

19. Einradtriebwerk nach Anspruch 18,
**dadurch gekennzeichnet,**
**dass** die erste Öffnung durch eine Verschraubung mit einem Drehkranzlagerinnenring (8) und die zweite Öffnung durch das Kegelrad (11) und eine einklemmbare Abdeckkappe (19, 62) verschlossen ist, wobei zwischen den drehfesten und drehbeweglichen Elementen Dichtungsmittel (37,38) angeordnet sind.

## Claims

1. One-wheel drive gearbox (1, 50, 70), in particular for industrial trucks, consisting of a gear case (3, 51, 71) with at least one gear stage (4), a flange mounted driving motor (2) and a driven running wheel (9),
**characterised in that**
the running wheel (9) is directly and torsion-resistantly connected with a gear wheel which has the form of a bevel wheel (11, 56, 83) and is supported in a rotatable manner on a coaxially internal and stationary supporting element, the bevel wheel (11, 56, 83) meshing with a bevel pinion (29) or a bevel wheel pinion toothing of a drive shaft (24) arranged at right angles to the running wheel axle.

2. One-wheel drive gearbox in accordance with claim 1,
**characterised in that**
the supporting element consists of a casing part, in particular a casing journal (13) or a torsion resistantly held shaft journal (53) which is accommodated in a casing cutout (52).

3. One-wheel drive gearbox in accordance with claims 1 or 2,
**characterised in that**
a running wheel rim (10, 58) and/or the output bevel wheel (11, 56, 83) is supported relative to a casing journal (13) or shaft journal (53) by means of bearing elements (14, 15).

4. One-wheel drive gearbox in accordance with claims 1, 2, or 3,
**characterised in that**
the gearing (4) is of a two-stage type and a first gear stage with its spur toothing (31) is orientated towards the driving motor (2) whilst a second gear stage with its bevel wheel toothing (21) is allocated to the running wheel (9), the two gear stages connected by the driving shaft (24), which is carried in the casing (3).

5. One-wheel drive gearbox, in accordance with at least one of claims 1 - 4,
**characterised in that**
a casing journal (13) is arranged axially relative to the running wheel (9) and bolted together with the casing (3).

6. One-wheel drive gearbox, in accordance with at least one of claims 1 - 5,
**characterised in that**
a casing journal (13) is arranged axially relative to the running wheel (9) and forms an integral part of the casing (3).

7. One-wheel drive gearbox, in accordance with at least one of claims 1 - 6,
**characterised in that**
a shaft journal (53) is press fitted in a cutout (52) of the casing (51).

8. One-wheel drive gearbox, in accordance with at least one of claims 1 - 7,
**characterised in that**
the casing journal (13) and/or the shaft journal (53) is provided for accommodating at least one anti-friction bearing (15, 16).

9. One-wheel drive gearbox, in accordance with at least one of claims 1 - 8,
**characterised in that**
the felly (10) and/or the bevel wheel (11, 56, 83) are supported on the anti-friction bearing (15, 16).

10. One-wheel drive gearbox, in accordance with at least one of claims 1 - 9,
**characterised in that**
the bevel wheel (11, 56, 83) is provided with an integrally formed pot shaped part (57, 84) which extends towards the running wheel (9).

11. One-wheel drive gearbox, in accordance with at least one of claims 1 - 10,
**characterised in that**
the torsionally resistant casing journal (13) or shaft journal (53) houses a pumping device which consists of an axially movable ram (74) and a pressure compartment (76) with one inlet valve (78) and one outlet valve (77).

12. One-wheel drive gearbox, in accordance with at least one of claims 1 - 11,
**characterised in that**
the ram (74) extends through a thrust washer (86) into a groove (85) of the pot-shaped extension part (84) of the bevel wheel (83), the ram (74) being forced by a spring (82) into the groove (84) and the groove (84) being of annular arrangement and exhibiting a wave-shaped depression.

13. One-wheel drive gearbox, in accordance with at least one of claims 1 - 12,
**characterised in that**
the drive shaft (24) exhibits a drilled hole (81) which is designed for oil passage and which ends in the pressure compartment (76) above the outlet valve (77), whilst the inlet valve (78) is connected with the lower gear inner chamber (79).

14. One-wheel drive gearbox, in accordance with at least one of claims 1 - 13,
**characterised in that**
the drive shaft (24) is located above a spur wheel (30) and below a bevel pinion (29) or bevel wheel pinion toothing.

15. One-wheel drive gearbox, in accordance with at least one of claims 1 - 14,
**characterised in that**
the spur wheel (30) and the bevel pinion (29) are force fitted on the drive shaft (24) and/or **in that** the drive shaft (24) is provided with a drilled hole (81) designed as an oil passage.

16. One-wheel drive gearbox, in accordance with at least one of claims 1 - 15,
**characterised in that**
the output shaft extension of the motor shaft (33) is provided with a drive pinion or pinion toothing (32).

17. One-wheel drive gearbox, in accordance with at least one of claims 1 - 16,
**characterised in that**
torque transmission takes place from the driving motor (2) through pinion toothing (32) to a spur wheel (30), which wheel is torsion resistantly connected with a drive shaft (24), the drive shaft (24), through bevel wheel toothing or a bevel pinion (29), driving the bevel wheel (11, 56, 83) that is connected with the running wheel (9).

18. One-wheel drive gearbox, in accordance with at least one of claims 1 - 17,
**characterised in that**
the casing (3, 51, 71) is a one-piece casing which has one first opening towards the driving motor (2) and a second opening towards the running wheel (9).

19. One-wheel drive gearbox, in accordance with claim 18,
**characterised in that**
the first opening is sealed by bolted connection with a slewing rim bearing inner ring (8) and the second opening by the bevel wheel (11) and a clampable covering cap (19, 62), sealing means (37, 38) being arranged between the stationary and the rotatable elements.

## Revendications

1. Transmission monoroue (1, 50, 70), notamment pour engins de manutention au sol, comprenant un carter d'engrenages (3, 51, 71) avec au moins un module de transmission (4), un moteur d'entraînement bridé (2) et une roue de roulement entraînée (9),
**caractérisée en ce que** la roue de roulement (9) est directement reliée, de façon fixe, à une roue de transmission conçue comme roue conique (11, 56, 83), laquelle tourne dans son logement sur un élément d'appui coaxial intérieur et fixe, étant précisé que la roue conique (11, 56, 83) s'engrène dans un pignon conique (29) ou une denture à pignon conique d'un arbre de transmission (24) disposé à angle droit par rapport à l'axe de la roue de roulement.

2. Transmission monoroue selon la revendication 1,
**caractérisée en ce que** l'élément d'appui est composé d'un élément de carter, notamment d'un tourillon (13) de carter, ou d'un tourillon d'arbre (53) maintenu fixe, lequel est logé dans un évidement du carter (52),

3. Transmission monoroue selon la revendication 1 ou 2,
**caractérisée en ce qu'**une couronne (10, 58) de roue de roulement et/ou la roue conique (11, 56, 83) côté sortie d'arbre est soutenue par rapport à un tourillon de carter (13) ou un tourillon d'arbre (53) par l'intermédiaire d'éléments de palier (14, 15).

4. Transmission selon la revendication 1, 2 ou 3,
**caractérisée en ce que** le module de transmission (4) est conçu à deux étages et qu'un premier étage de transmission présentant une denture à roue droite (31) est dirigé vers le moteur d'entraînement (2), tandis qu'un second étage de transmission présentant une denture à roue conique (21) est dirigé vers la roue de roulement (9), étant précisé que les deux étages de transmission sont reliés par l'arbre de transmission (24) logé dans le carter (3).

5. Transmission monoroue selon au moins l'une des revendications 1 à 4,
**caractérisée en ce qu'**un tourillon (13) de carter est disposé axialement par rapport à la roue de roulement (9) et vissé sur le carter (3).

6. Transmission monoroue selon au moins l'une des revendications 1 à 5,
**caractérisée en ce qu'**un tourillon (13) de carter est disposé axialement par rapport à la roue de roulement (9) et forme un seul bloc avec le carter (3).

7. Transmission monoroue selon au moins l'une des revendications 1 à 6,
**caractérisée en ce qu'**un tourillon d'arbre (53) est pressé dans un évidement (52) du carter (51),

8. Transmission monoroue selon au moins l'une des revendications 1 à 7,
**caractérisée en ce que** le tourillon (13) de carter et/ou le tourillon d'arbre (53) est/sont prévu(s) pour recevoir au moins un palier à roulement (15, 16).

9. Transmission monoroue selon au moins l'une des revendications 1 à 8,
**caractérisée en ce que** la couronne (10) de la roue de roulement et/ou la roue conique (11, 56, 83) s'appuie(nt) sur ce palier à roulement (15,16).

10. Transmission monoroue selon au moins l'une des revendications 1 à 9,
**caractérisée en ce que** la roue conique (11, 56, 83) présente une embase (57, 84) en forme de boisseau, rapportée d'un seul bloc, dirigée vers la roue de roulement (9).

11. Transmission monoroue selon au moins l'une des revendications 1 à 10,
**caractérisée en ce qu'**un dispositif de pompage, lequel est composé d'un poussoir (74) mobile axialement et d'un compartiment de pression (76) avec une soupape d'alimentation (78) et une soupape d'échappement (77), est intégré dans le tourillon (13) de carter ou le tourillon d'arbre (53) maintenu fixe.

12. Transmission monoroue selon au moins l'une des revendications 1 à 11,
**caractérisée en ce que** le poussoir (74), à travers une plaque de pression (86), s'engage dans une rainure (85) de l'embase en forme de boisseau (84) de la roue conique (83), étant précisé que le poussoir (74) est pressé dans la rainure (84) sous l'effet du ressort (82) et que la rainure (84) est disposée en forme de tore et qu'elle présente un creux de forme ondulée.

13. Transmission monoroue selon au moins l'une des revendications 1 à 12,
**caractérisée en ce que** l'arbre de transmission (24) présente un alésage (81) constituant une canalisation d'huile, laquelle débouche par l'intermédiaire de la soupape d'échappement (77) dans le compartiment de pression (76), tandis que la soupape d'admission (78) est reliée à la partie intérieure basse (79) de l'engrenage.

14. Transmission monoroue selon au moins l'une des revendications 1 à 13,
**caractérisée en ce que** l'arbre de transmission (24) est logé au-dessus d'une roue droite (30) et en dessous d'un pignon conique (29) ou d'une denture à roue conique.

15. Transmission monoroue selon au moins l'une des revendications 1 à 14,
**caractérisée en ce que** la roue droite (30) et le pignon conique (29) sont reliés par ajustement forcé à l'arbre de transmission (24) et/ou que l'arbre de transmission (24) présente un alésage (81) constituant une canalisation d'huile.

16. Transmission monoroue selon au moins l'une des revendications 1 à 15,
**caractérisée en ce que** le bout d'arbre de transmission de l'axe du moteur électrique (33) est muni d'un pignon d'entraînement ou d'une denture de pignon (32).

17. Transmission monoroue selon au moins l'une des revendications 1 à 16,
**caractérisée en ce qu'**il y a une transmission de couple à partir d'un moteur d'entraînement (2) présentant une denture de pignon (32), sur une roue droite (30), laquelle est fixée sur un arbre de transmission (24) et étant précisé que l'arbre de transmission (24) entraîne la roue conique (11, 56, 83) reliée à la roue de roulement (9) par l'intermédiaire d'une denture à roue conique ou d'un pignon conique (29).

18. Transmission monoroue selon au moins l'une des revendications 1 à 17,
**caractérisée en ce que** le carter (3, 51, 71) est conçu d'un seul bloc et qu'une première ouverture est dirigée vers le moteur d'entraînement (2) et qu'une seconde ouverture est dirigée vers la roue de roulement (9).

19. Transmission monoroue selon au moins l'une des revendications 1 à 18,
**caractérisée en ce que** la première ouverture est fermée par une bague intérieure de roulement à couronne pivotante (8) par l'intermédiaire d'un raccord fileté et la seconde ouverture par la roue conique (11) et un cache pinçable (19, 62), étant précisé qu'il y a des produits d'étanchéité (37, 38) entre les éléments fixes et ceux tournant.
